# EUROPÄISCHE PATENTSCHRIFT

(11) **EP 0 386 418 B1**
(45) Veröffentlichungstag und Bekanntmachung des Hinweises auf die Patenterteilung: **21.12.1994**
(21) Anmeldenummer: 90100884.7
(22) Anmeldetag: 17.01.1990
(51) Int. Cl.: H04B 1/66

(54) **Verfahren zur Datenreduktion bei digitalen Tonsignalen und zur genäherten Rückgewinnung der digitalen Tonsignale**
Method for data reduction of digital audio signals and for approximate recovery of same
Procédé de réduction de données pour signaux audionumériques et de récupération approximative de signaux audionumériques

(30) Priorität: 06.03.1989 DE 3907551
(43) Veröffentlichungstag der Anmeldung: 12.09.1990
(73) Patentinhaber: ROBERT BOSCH GMBH, 70442 Stuttgart (DE)
(72) Erfinder: Orglmeister, Reinhold, Dr.-Ing., D-1000 Berlin 21 (DE)

(56) Entgegenhaltungen:
- RUNDFUNKTECHNISCHE MITTEILUNGEN. Bd. 30, Nr. H3, 1986, NORDERSTEDT DE Seiten117 - 123; KRAHE: 'Ein Verfahren zur Datenreduktion bei digitalen Audiosignalenunter Ausnutzung psychoakustischer Phänomene'
- BELL SYSTEM TECHNICAL JOURNAL. Bd. 56, Nr. 5, Mai 1977, NEW YORK US Seiten 747- 769; CROCHIERE: 'On the Design of Subband Coders for Low-Bit-Rate Speech Communication'

## Beschreibung

Die Erfindung geht von einem Verfahren nach dem Oberbegriff des Anspruchs 1 aus.

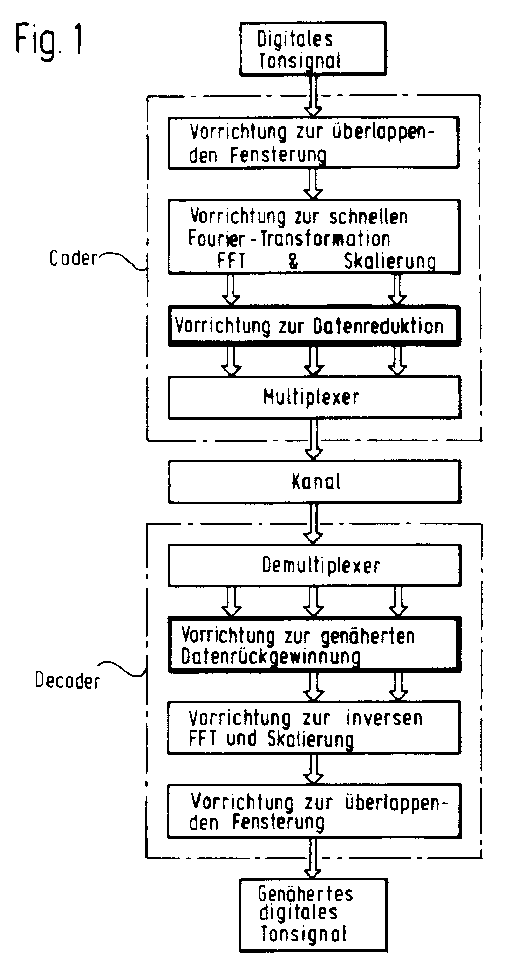

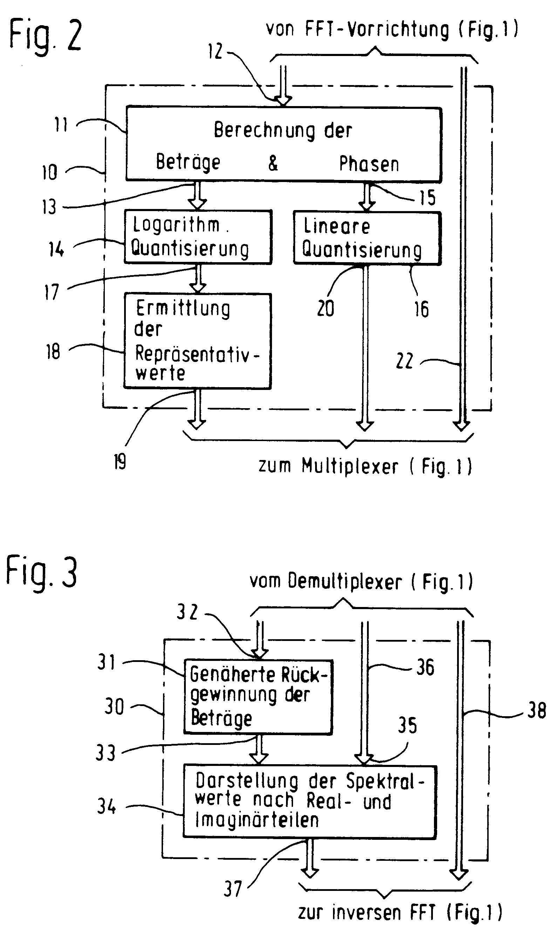

Es ist ein derartiges Verfahren bekannt (Rundfunktechnische Mitteilungen, 1986, Heft 3, Seiten 117 bis 123), zu dessen Durchführung ein Koder und ein Dekoder eingesetzt werden, die vorzugsweise den in Fig. 1 dargestellten Aufbau haben. Mit dem bekannten Verfahren wurde eine Signaldarstellungsform gefunden, die den Datenfluß von der Schallquelle (digitales Tonsignal) zum Gehörsinn (genähertes digitales Tonsignal) reduziert, indem einerseits die statistischen Eigenschaften des Signals und andererseits die begrenzte Verarbeitungskapazität des menschlichen Gehörsinns in Form der Verdeckung ausgenutzt werden. Der bekannte Koder umfaßt eine Serienschaltung aus einer Vorrichtung zur überlappenden Fensterung, eine Vorrichtung zur schnellen Fourier-Transformation, eine Vorrichtung zur Datenreduktion und einen Multiplexer, der mit einem Kanal, zum Beispiel einem digitalen Tonspeicher oder einer digitalen Tonübertragungsstrecke, verbunden ist. Der Dekoder umfaßt eine Serienschaltung aus einem Demultiplexer, einer Vorrichtung zur genäherten Datenrückgewinnung, einer Vorrichtung zur inversen schnellen Fourier-Transformation und einer Vorrichtung zur überlappenden Fensterung, an deren Ausgang das genäherte digitale Tonsignal zur Tonwiedergabe zur Verfügung steht.

Die bekannte Vorrichtung setzt zur Datenreduktion im Koder und zur genäherten Datenrückgewinnung im Dekoder einen verhältnismäßig hohen technischen Aufwand voraus. Außerdem muß viel störanfällige Seiteninformation übertragen werden.

### Aufgabe

Der Erfindung liegt die Aufgabe zugrunde, ein Verfahren gemäß dem Oberbegriff des Anspruchs 1 derart weiterzubilden, daß der technische Aufwand zur Erzielung der Datenreduktion bzw. zur genäherten Datenrückgewinnung erheblich verringert wird und daß nur ein Minimum an störanfälliger Seiteninformation übertragen werden muß.

### Lösung und erzielbare Vorteile

Diese Aufgabe wird bei einem Verfahren gemäß dem Oberbegriff des Anspruchs 1 durch die im kennzeichnenden Teil dieses Anspruchs angegebenen Merkmale gelöst. Die mit der Erfindung erzielbaren Vorteile bestehen insbesondere darin, daß eine Reduzierung der Datenmenge bzw. der Datenrate bei vergleichsweise geringem technischen Aufwand möglich ist.

Bevorzugte Anwendungsgebiete für das erfindungsgemäße Verfahren sind digitale Videorecorder mit Bild- und Tonspur sowie der digitale Satelliten-Rundfunk.

### Beschreibung

Ein Ausführungsbeispiel der Mittel zur Datenreduktion bzw. zur genäherten Datenrückgewinnung ist in der Zeichnung an Hand der Fig. 2 und 3 dargestellt und wird im folgenden näher beschrieben. Die Fig. 2 zeigt ein Blockschaltbild einer Vorrichtung zur koderseitigen Datenreduktion und die Fig. 3 ein Blockschaltbild einer Vorrichtung zur dekoderseitigen genäherten Datenrückgewinnung.

Die Vorrichtung zur Datenreduktion 10 in Fig. 2 umfaßt eine Vorrichtung zur Berechnung der Beträge und Phasen 11, deren Eingänge 12 mit Ausgängen der Vorrichtung zur schnellen Fourier-Transformation nach Fig. verbunden sind. Die Beträge liefernden Ausgänge 13 sind mit einer Vorrichtung zur logarithmischen Quantisierung 14 und die Phasen liefernden Ausgänge 15 mit einer Vorrichtung zur linearen Quantisierung 16 verbunden. An den Ausgang 17 der Vorrichtung 14 schließt sich eine Vorrichtung zur Ermittlung der Repräsentativwerte 18 an. Ausgänge 19 der zuletzt genannten Vorrichtung 18, Ausgänge 20 der Vorrichtung zur linearen Quanitisierung 16 und ein Leitungsbündel 22, das mit Ausgängen der Vorrichtung zur schnellen Fourier-Transformation nach Fig. 1 verbunden ist und die Skalierungsfaktoren überträgt, sind mit entsprechenden Eingängen des Multiplexers nach Fig. 1 verbunden.

Die vorstehend beschriebene Vorrichtung zur Datenreduktion hat folgende Funktion.

Aus den an den Eingängen 12 liegenden, durch die schnelle Fourier-Transformation erhaltenen Spektralwerten berechnet die Vorrichtung 11 die Beträge, die in der Vorrichtung zur logarithmischen Quantisierung 14 logarithmisch quantisiert werden. Parallel dazu werden die aus der Vorrichtung 11 erhaltenen Phasen in der Vorrichtung zur linearen Quantisierung 16 linear quantisiert. Die der logarithmischen Quantisierung unterworfenen Beträge des vorzugsweise oberen Frequenzbereiches werden in der Vorrichtung zur Ermittlung der Repräsentativwerte 18 in mehrere Gruppen aufgeteilt. Die Größen der einzelnen Gruppen werden derart gewählt, daß sie mit wachsender Frequenz zunehmen. Für jede Gruppe ermittelt die Vorrichtung 18 durch quadratische Mittelwertbildung einen Repräsentativwert. Die derart erhaltenen Repräsentativwerte werden ebenso wie die durch die Vorrichtung 16 linear quantisierten Phasen und die von der Vorrichtung zur schnellen Fourier-Transformation nach Fig. 1 gelieferten Skalierungsfaktoren dem Multiplexer nach Fig. 1 zugeführt und von diesem an den Kanal weitergeleitet.

Durch die Ermittlung von Repräsentativwerten aus den mit zunehmender Frequenz größer werdenden Gruppen wird eine zusätzliche Datenreduktion erreicht, die bei der Wiedergewinnung des genäherten digitalen Tonsignals und der Wiedergabe dieses Tonsignals für das menschliche Gehör kaum zu einer Qualitätseinbuße führt. Außerdem fällt wenig Seiteninformation an, weil bei dem vorliegenden Verfahren auf eine adaptive Zuweisung verzichtet wird. Die Vorrichtung zur genäherten Datenrückgewinnung 30 nach Fig. 3 umfaßt eine Vorrichtung zur genäherten Rückgewinnung der Beträge 31, deren Eingänge 32 die quantisierten Beträge bzw. die Repräsentativwerte vom Demultiplexer zugeführt werden. Ausgänge 33 der Vorrichtung 31 sind mit entsprechenden Eingängen einer Vorrichtung zur Darstellung der Spektralwerte nach Real- und Imaginärteilen 34 verbunden. Die zuletzt genannte Vorrichtung weist noch Eingänge 35 auf, die über ein Leitungsbündel 36 mit weiteren Ausgängen des Demultiplexers nach Fig. 1 verbunden sind. Ausgänge 37 der Vorrichtung zur Darstellung der Spektralwerte nach Real- und Imaginärteilen 34 und ein die Skalierungsfaktoren übertragendes Leitungsbündel 38 des Demultiplexers nach Fig. 1 führen zu Eingängen der Vorrichtung zur inversen schnellen Fourier-Transformation und Skalierung nach Fig. 1.

Die Wirkungsweise der vorstehend beschriebenen Vorrichtung zur genäherten Datenrückgewinnung hat folgende Funktion.

Aus den an den Eingängen 32 liegenden quantisierten Beträgen bzw. Repräsentativwerten gewinnt die Vorrichtung zur genäherten Rückgewinnung der Beträge 31 die Beträge genähert zurück, wobei aus dem Repräsentativwert einer jeden Gruppe jeweils alle Beträge der Gruppe durch Gleichsetzung mit dem Mittelwert genähert wiedergewonnen werden. Die an den Ausgängen 33 verfügbaren Beträge werden zusammen mit den von dem Demultiplexer nach Fig. 1 über das Leitungsbündel 36 herangeführten Phasen in der Vorrichtung zur Darstellung der Spektralwerte nach Real- und Imaginärteilen 34 als Real- und Imaginärwerte dargestellt. Die an den Ausgängen 37 liegenden Werte werden zusammen mit den über das Leitungsbündel 38 herangeführten Skalierungsfaktoren der Vorrichtung zur inversen schnellen Fourier-Transformation nach Fig. 1 zugeführt. Durch die anschließende überlappende Fensterung erhält man dann das genäherte digitale Tonsignal.

Zur hardwaremäßigen Realisierung der Erfindung wird für die überlappende Fensterung, die (inverse) schnelle Fourier-Transformation und Skalierung vorzugsweise ein 16-Bit-Festkomma-Vektorprozessor mit Block-Floating-Point-Arithmetik, das ist zum Beispiel ein Prozessor vom Typ ZR 34161 (ZORAN), eingesetzt. Für die Weiterbearbeitung der Spektralwerte wird vorzugsweise ein General Purpose Digital Signal Processor, zum Beispiel vom Typ DSP56001 (MOTOROLA), eingesetzt.

Alternativ können die einzelnen Signalprozessoren zu einem Ein-Chip-Signalprozessor für den Koder und einem weiteren Ein-Chip-Signalprozessor für den Dekoder zusammengefaßt werden.

## Patentansprüche

1. Verfahren zur Datenreduktion bei digitalen Tonsignalen und zur genäherten Rückgewinnung der digitalen Tonsignale unter Verwendung einer überlappenden Fensterung und einer schnellen Fourier-Transformation, **dadurch gekennzeichnet,** daß die Spektralwerte nach ihren Beträgen und Phasen dargestellt werden, daß die Beträge der Spektralwerte logarithmisch quantisiert und die Phasen linear quantisiert werden, daß die logarithmisch quantisierten Beträge vorzugsweise nur des oberen Frequenzbereiches, in Gruppen aufgeteilt werden, deren Größen frequenzabhängig gewählt sind, daß für jede Gruppe ein Repräsentativwert ermittelt wird, daß die Repräsentativwerte, die linear quantisierten Phasenwerte und die bei der schnellen Fourier-Transformation erhaltenen Skalierungsfaktoren einem Multiplexer zugeführt werden, an dessen Ausgang das datenreduzierte digitale Signal zur Verfügung steht, daß die Beträge der datenreduzierten digitalen Signale rückgewonnen und zusammen mit den Phasen in Real- und Imaginärteile aufgeteilt werden und daß die Real- und Imaginärteile zusammen mit den Skalierungsfaktoren der inversen schnellen Fourier-Transformation mit Skalierung und einer überlappenden Fensterung unterworfen werden.

2. Verfahren nach Anspruch 1, dadurch gekennzeichnet, daß die Repräsentativwerte durch quadratische Mittelwertbildung der Beträge gebildet werden.

3. Verfahren nach Anspruch 1, dadurch gekennzeichnet, daß die Größe der Gruppen mit wachsender Frequenz der Spektralwerte zunimmt.

4. Verfahren nach einem der Ansprüche 1 bis 3, dadurch gekennzeichnet, daß die erforderlichen Rechenoperationen in einem oder mehreren Signalprozessoren durchgeführt werden.

## Claims

1. Method for data reduction for digital audio signals and for approximate recovery of the digital audio signals using an overlapping windowing and a fast Fourier transform, characterized in that the spectral values are represented according to their magnitudes and phases, in that the magnitudes of the spectral values are logarithmically quantized and the phases are linearly quantized, in that the logarithmically quantized magnitudes, preferably only of the upper frequency range, are divided into groups, the sizes of which are selected depending on frequency, in that a representative value is calculated for each group, in that the representative values, the linearly quantized phase values and the scaling factors obtained during the fast Fourier transform are supplied to a multiplexer, at the output of which the data-reduced digital signal is available, in that the magnitudes of the data-reduced digital signals are recovered and divided, together with the phases, into real and imaginary parts, and in that the real and imaginary parts, together with the scaling factors, are subjected to the inverse fast Fourier transform with scaling and an overlapping windowing.

2. Method according to Claim 1, characterized in that the representative values are formed by forming the root-mean-square value of the magnitudes.

3. Method according to Claim 1, characterized in that the size of the groups increases as the frequency of the spectral values rises.

4. Method according to one of Claims 1 to 3, characterized in that the required computing operations are carried out in one or more signal processors.

## Revendications

1. Procédé de réduction des données de signaux audionumériques et pour la récupération de signaux audionumériques utilisant des fenêtres à chevauchement et une transformation de Fourier rapide, procédé caractérisé en ce qu'on présente les valeurs spectrales selon leurs amplitudes et leurs phases, on quantifie de manière logarithmique l'amplitude des valeurs spectrales et on quantifie de manière linéaire leurs phases, les valeurs à quantification logarithmique étant réparties en des groupes de préférence seulement pour la plage des fréquences supérieures, groupes dont on choisit l'importance en fonction des fréquences, et pour chaque groupe on détermine une valeur représentative, on réunit les valeurs représentatives, les valeurs de phases à quantification linéaire et les coefficients scalaires obtenus par transformation de Fourier rapide dans un multiplexeur dont la sortie fournit le signal numérique de données réduites, on récupère l'amplitude des signaux numériques de données réduites et avec les phases on les répartit en parties réelles et parties imaginaires et en ce qu'on soumet les parties réelle et les parties imaginaires ainsi que les coefficients scalaires à une transformation rapide de Fourier inverse, avec scalérisation et fenêtres à chevauchement.

2. Procédé selon la revendication 1, caractérisé en ce qu'on forme les valeurs représentatives en formant les valeurs moyennes au carré des amplitudes.

3. Procédé selon la revendication 1, caractérisé en ce que la grandeur des groupes augmente en fonction de la fréquence de la valeur spectrale.

4. Procédé selon l'une des revendications 1 à 3, caractérisé en ce qu'on effectue les opérations de calcul nécessaires dans un ou plusieurs processeur de signal.
